# EUROPÄISCHE PATENTSCHRIFT

(11) **EP 2 565 020 B1**
(45) Veröffentlichungstag und Bekanntmachung des Hinweises auf die Patenterteilung: **19.04.2017**
(21) Anmeldenummer: 12182355.3
(22) Anmeldetag: 30.08.2012
(51) Int. Cl.: B29C 70/54, B29C 70/44

(54) **Herstellung eines Faserverbundbauteils**
Production of a fibre composite component
Fabrication d'un élément composite en fibres

(30) Priorität: 30.08.2011 DE 102011111452
(43) Veröffentlichungstag der Anmeldung: 06.03.2013
(73) Patentinhaber: Deutsches Zentrum für Luft- und Raumfahrt e.V., 51147 Köln (DE)
(72) Erfinder: Friedrich, Martin, 30161 Hannover (DE); Wolff, Johannes, 38106 Braunschweig (DE); Hindersmann, Arne, 21680 Stade (DE); Könnicke, Daniela, 74074 Heilbbronn (DE)
(74) Vertreter: Aisch, Sebastian

(56) Entgegenhaltungen:
- DE-C1- 19 912 723
- DE-T2- 69 626 645
- US-A1- 2008 044 506

## Beschreibung

Die Erfindung betrifft ein Verfahren zur Herstellung eines Faserverbundbauteils, wobei ein in ein Formwerkzeug eingebrachtes Faserhalbzeug mit einem Matrixharz injiziert wird.

Bei der Herstellung von Faserverbundbauteilen, die mittels des Injektionsverfahrens hergestellt werden sollen, wird ein Faserhalbzeug in ein offenes oder geschlossenes Formwerkzeug eingebracht und anschließend mit einem Matrixharz bzw. Injektionsharz infiltriert, bis eine vollständige Tränkung des Faserhalbzeuges erreicht wurde. Nach der vollständigen Tränkung mit dem Matrixharz wird meist unter Zuführung von Wärme das Injektionsharz ausgehärtet, bis sich das fertige Faserverbundbauteil gebildet hat.

Die Injektion des Matrixharzes in das Faserhalbzeug erfolgt über eine Druckdifferenz zwischen dem Faserhalbzeug und dem Matrixharz. So wird nicht selten vor der Injektion das in ein Vakuum abgedichtete Werkzeugform eingebrachte Faserhalbzeug evakuiert, bis sich ein Feinvakuum im Inneren eingestellt hat. Wird nun die Injektionsleitung des Formwerkzeuges geöffnet, so fließt das Matrixhatz aufgrund der Druckdifferenz in das Innere des Formwerkzeuges und infiltriert dort das Faserhalbzeug. Dabei kann das Matrixharz zusätzlich mit einem Druck beaufschlagt werden, um die Druckdifferenz zwischen Faserhalbzeug und Matrixharz zu erhöhen.

Ziel dabei ist es, dass das gesamte Faserhalbzeug mit dem Matrixharz vollständig infiltriert wird, um Lufteinschlüsse und trockene Bereiche innerhalb des Faserverbundbauteils zu vermeiden. Derartige Lufteinschlüsse oder trockene Bereiche sind, sofern sie ein bestimmtes Fehlertoleranzvolumen überschreiten, Fehlstellen des Bauteils, welche die Qualität und die Sicherheit des Bauteils beeinträchtigen und bei Bauteilen, die in sicherheitskritischen Bereichen Anwendung finden, als Ausschuss aussortiert werden.

Die Ursachen für eine unvollständige Tränkung des Faserhalbzeuges resultieren aus dem bevorzugten Strömen des Matrixharzes entlang des niedrigsten Fließwiderstandes. Ein solcher gegenüber dem Rest des Faserhalbzeuges niedrigerer Fließwiderstand kommt beispielsweise an Bauteilkanten, an denen wenige oder gar keine Fasern vorhanden sind, in Bereichen hohen Umformgrade mit abweichenden Faservolumengehalten und entlang von Materialfalten vor. Dabei wird in der Regel versucht, ein Voreilen des Matrixharzes in den Bereichen mit einem niedrigeren Fließwiderstand zu vermeiden, um das Einschließen von Luft und somit das Bilden von trockenen Bereichen zu verhindern.

Kann das Bilden von trockenen Bereichen nicht vollständig vermieden werden, so wird beispielsweise das Matrixharz nach einer Vortränkung des Fasergeleges mit einem hohen Druck (Nachdruck) beaufschlagt, um sicherzustellen, dass das Faserhalbzeug vollständig mit Matrixharz getränkt und infiltriert wurde. Dies ist jedoch gerade bei größeren Bauteilen problematisch, da mit sehr hohen Drücken (200 bis 500 Bar) gearbeitet werden muss, um gegen den hohen Fließwiderstand innerhalb des Fasergeleges anzukommen und Fehlstellen aufgrund unzureichender Tränkung zu vermeiden. Die verwendeten Formwerkzeuge müssen dabei den hohen Druckbelastungen Stand halten, was sehr zeit- und kostenintensive Arbeiten mit sich bringt. Außerdem muss die Druckbeaufschlagungsanlage zur Erzeugung des hohen Nachdruckes in den Herstellungsprozess integriert werden, was ebenfalls die Herstellungskosten erhöht.

Aus der DE 10 2007 013 987 A1 (Familienmitglied von US2008/044506) ist ein Werkzeug zur Herstellung eines Faserverbundbauteils bekannt, bei dem mehrere Öffnungen bzw. Nuten in der Werkzeugoberfläche vorgesehen sind, um so ganz oder teilweise auf herkömmliche Fließhilfen verzichten zu können, ohne die Bauteilqualität zu vermindern.

Aus der DE 696 26 645 T2 ist ein Verfahren zur Herstellung einer Faserverbundstruktur bekannt, bei dem ein Kern vorgesehen ist, dessen Umfangsfläche Zuführkanäle zur Tränkung des Faserhalbzeuges vorgesehen ist. Die einzelnen Zuführkanäle werden dabei mit Hilfe eines Harzverteilungsnetzwerkes in das Bauteil injiziert.

Aus der DE 199 12 723 C1 ist ein Verfahren und eine Vorrichtung zur Bestimmung der Durchtränkung von Faserhalbzeugen bekannt, wobei das Fasermaterial mit einem Reflexkoppler zur Messung des Reflektionsgrades des Faserhalbzeuges angeordnet ist. Hierdurch lässt sich die Fließfront des Harzes innerhalb des Faserhalbzeuges bestimmen.

Es ist daher Aufgabe der vorliegenden Erfindung ein Verfahren zur Herstellung eines Faserverbundbauteils anzugeben, dass eine prozesssichere und vollständige Tränkung des Faserverbundbauteils gewährleistet und die aus dem Stand der Technik bekannten Nachteile dabei vermeidet.

Die Aufgabe wird mit dem eingangs genannten Verfahren zur Herstellung eines Faserverbundbauteils erfindungsgemäß gelöst durch die Merkmale des Anspruchs 1. Erfindungsgemäß wird somit vorgeschlagen, das zunächst in einem ersten Schritt a.) Injektionskanäle zur linienförmigen Injektion des Faserhalbzeuges mit dem Matrixharz derart angeordnet werden, dass das Faserhalbzeug durch die Anordnung der Injektionskanäle in eine Mehrzahl von Teilbereichen unterteilt wird. Dies hat zum einen den Vorteil, dass durch die linienförmige Vorverteilung des Matrixharzes über das gesamte Faserhalbzeug der Fließweg des Harzes innerhalb der Fasern bis zur vollständigen Bauteiltränkung reduziert und somit die Injektionszeit verkürzt wird.

Zum anderen hat die Unterteilung des gesamten Faserhalbzeuges in eine Mehrzahl von Teilbereichen durch die Injektionskanäle den Vorteil, dass für die Frage der vollständigen Tränkung ohne Fehlstellen nunmehr nicht das Bauteil in seiner Gesamtheit betrachtet werden muss, sondern nur ein oder mehrere Teilbereiche entsprechend repräsentativ, wobei eine vollständige Tränkung des Faserhalbzeuges in den Bereichen der Injektionskanäle auch im schlechtesten Fall als gesichert angenommen werden kann. Ausgehend vom schlechtesten Fall kann somit angenommen werden, dass das maximale ungetränkte Volumen des Bauteils dem Volumen der durch die Anordnung der Injektionskanäle entstehenden Teilbereiche entspricht.

In einem zweiten erfindungsgemäßen Schritt b.) wird dann ein Injektionsdruck zum Injizieren des Matrixharzes in das Faserhalbzeug in Abhängigkeit von dem Volumen zumindest eines Teilbereiches und von einem vorgegebenen Fehlertoleranzvolumen ermittelt. Das vorgegebne Fehlertoleranzvolumen beschreibt dabei ein tolerierbares ungetränktes Restvolumen des jeweiligen Teilbereiches, der nach dem Injizieren des Matrixharzes in das Faserhalbzeug in dem jeweiligen Teilbereich verbleibt. Denn ist das tolerierbare ungetränkte Restvolumen eines Teilbereiches kleiner als eine tolerierbare Fehlergröße, so weißt das Bauteil dementsprechend auch keine Fehlstellen in Bezug auf die Bauteilqualität auf. Der ermittelte Injektionsdruck ist somit dergestalt, dass die Teilbereiche und die damit einhergehenden Bauteilvolumen 100%ig prozesssicher mit dem Matrixharz nach Beendigung des Injektionsvorganges getränkt sind.

Nach der Ermittlung des Injektionsdruckes wird dann das Matrixharz durch die Injektionskanäle in das Faserhalbzeug mit dem ermittelten Injektionsdruck injiziert, so dass sich nach Abschluss des Verfahrens ein vollständig getränktes Faserhalbzeug ergibt, welches dann zu dem Faserverbundbauteil ausgehärtet werden kann.

Mit dem erfindungsgemäßen Verfahren kann somit sichergestellt werden, dass sich in den späteren gesamten Faserverbundbauteilen keine ungetränkten Bereiche befinden, die ein größeres als das vorgegebene Fehlertoleranzvolumen aufweisen. Damit kann nicht nur eine schnelle Injektion des Fasergeleges mit dem Matrixharz erreicht werden, sondern auch eine prozesssichere Tränkung derart, dass Fehlstellen von vornherein vermieden werden können. Darüber hinaus muss das Matrixharz nicht mehr pauschal mit einem extrem hohen, prozesssicheren Injektionsdruck beaufschlagt werden, was zu hohen Kosten bezüglich des Formwerkzeuges und der verwendeten Anlagen führt, sondern der verwendete Injektionsdruck kann auf die konkreten Gegebenheiten des entsprechenden Bauteils abgestimmt werden. Vorteilhafterweise werden die Injektionskanäle derart angeordnet, dass eine erste Anzahl von Injektionskanälen im Wesentlichen parallel zueinander und eine davon verschiedene zweite Anzahl von Injektionskanälen ebenfalls im wesentlichen parallel zueinander ausgerichtet werden, wobei die zweite Anzahl von Injektionskanälen nicht parallel zu der ersten Anzahl von ersten Injektionskanälen ist. Dadurch ergibt sich, je nach Ausrichtung der ersten Anzahl von Injektionskanälen zu der zweiten Anzahl von Injektionskanälen, ein geometrisches Muster der Injektionskanäle, beispielsweise über die gesamte Bauteiloberfläche, so dass das Faserhalbzeug zum einen in eine Mehrzahl von durch die Injektionskanäle eingeschlossene Teilbereiche unterteilt wird und zum anderen vorteilhafterweise vorgetränkt werden kann. Durch eine geeignete Wahl des Abstandes der Injektionskanäle zueinander kann die Größe der Teilbereiche variiert werden.

In einer besonderen vorteilhaften Ausführungsform werden die Injektionskanäle derart angeordnet, dass sie sich untereinander zumindest teilweise kreuzen, wobei die Teilbereiche dann durch die von den sich kreuzenden Injektionskanälen eingeschlossenen Bereiche gebildet werden. Neben der Unterteilung des gesamten Faserhalbzeuges in eine Mehrzahl von Teilbereichen hat die Kreuzung der Injektionskanäle den weiteren Vorteil, dass die Prozesssicherheit beim Injizieren des Matrixharz erhöht wird, da bei einem Verstopfen eine der Injektionskanäle das Matrixharz einen alternativen Weg nehmen kann. Somit wird auch letztendlich die Fehlersicherheit hergestellt.

Des Weiteren ist es besonders vorteilhaft, wenn die Injektionskanäle so angeordnet werden, dass zumindest die Injektionskanäle im Wesentlichen parallel zu der Bauteiloberfläche ausgerichtet sind.

Vorteilhafterweise werden die Injektionskanäle derart angeordnet, dass im Wesentlichen gleich große Teilbereiche über das gesamte Faserhalbzeug entstehen. Dies vereinfacht die Berechnungsgrundlage. Ist aufgrund der Bauteilgeometrie eine gleich große Verteilung der Teilbereiche nicht möglich, so wird für die Berechnung des Injektionsdruckes derjenige Teilbereich herangezogen, der das größte Volumen aufweist. Somit wird eine vollständige Tränkung immer sichergestellt.

Darüber hinaus ist es ganz besonders vorteilhaft, wenn die Injektionskanäle derart angeordnet werden, dass voreilgefährdete Bereiche des Faserhalbzeuges als Fließhilfe berücksichtigt werden. Denn mit einer Anordnung der Fließkanäle über das gesamte Faserhalbzeug hinweg können voreilgefährdete Bereiche als Fließhilfe zur Unterstützung mit verwendet werden, da sich ein Voreilen des Matrixharzes in Faserbereichen mit geringem Fließwiderstand nicht mehr negativ auf den Herstellungsprozess auswirken. Durch die Betrachtung des Faserhalbzeuges in einer Mehrzahl von Teilbereichen und ein darauf abgestimmter Injektionsdruck verhindert von vornherein jegliche Bildung von Fehlstellen, die normalerweise durch derartiges Voreilen des Matrixharzes entstehen. Durch die Verwendung derartig voreilgefährdeter Bereiche als Fließhilfe kann das Formwerkzeug einfacher und günstiger hergestellt werden, was letztendlich die Kosten von dem gesamten Herstellungsprozess und somit die Kosten für das fertige Bauteil reduziert.

In einer weiteren besonderen Ausführungsform wird das geschlossene Formwerkzeug mit dem eingebrachten Faserhalbzeug vor der Injektion des Matrixharzes evakuiert, so dass sich beispielsweise ein Vakuum oder Feinvakuum einstellt. Anschließend wird in einer ersten Druckstufe das Faserhalbzeug mit dem Matrixharz aufgrund der Druckdifferenz zwischen dem evakuierten Bauteil und dem Atmosphärendruck injiziert. Um nun die Volltränkung sicherzustellen, wird in einer zweiten Druckstufe das Matrixharz mit einem Injektionsdruck beaufschlagt der in Schritt b.) berechnet wurde. Vorteilhafterweise wird hierbei der Injektionsdruck weiterhin auch in Abhängigkeit der Druckdifferenz der ersten Druckstufe ermittelt, so dass anschließend ein 100%ig prozesssicheres getränktes Bauteil ergibt. So ist es denkbar, dass der gesamte Differenzdruck zwischen Vorvakuum und Nachdruck zur Fehlerkompression verwendet wird, so dass bspw. bei sehr geringem Vorvakuum der Nachdruck niedriger gewählt werden kann.

Die Ermittlung des Injektionsdruckes kann dabei beispielsweise mit Hilfe des idealen Gasgesetzes (bspw. überschlagsweise) zur Komprimierung von Gasen ermittelt werden, dass hierfür notwendige Berechnungsgrundlage liefert, da letztendlich bei der Injektion des Matrixharzes die in den Teilbereichen vorhandene Luft auf das tolerierbare Fehlerrestvolumen komprimiert werden muss.

Die Erfindung wird anhand der beigefügten Zeichnungen näher erläutert. Es zeigen:
- Figur 1: - Schematisch Darstellung eines einfachen Formwerkzeuges zur Durchführung des erfindungsgemäßen Verfahrens;
- Figur 2: - schematisch Darstellung eines Schnittes durch ein derartiges Formwerkzeug mit eingebrachtem Faserhalbzeug.

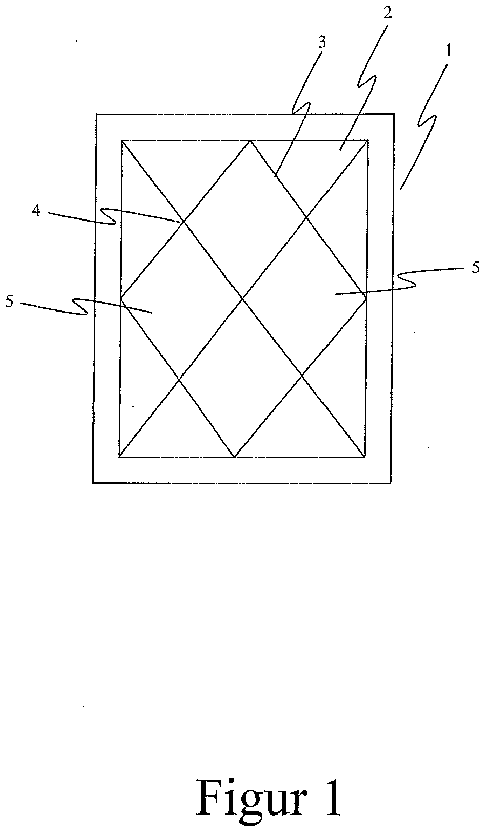

Figur 1 zeigt schematisch die Darstellung eines einfachen Formwerkzeuges 1 mit einer formgebenden Werkzeugoberfläche 2, auf die zur Herstellung eines Faserverbundbauteils ein Faserhalbzeug (nicht dargestellt) einbringbar ist. Die in Figur 1 dargestellte Draufsicht auf das Formwerkzeug 1 zeigt auf der Werkzeugoberfläche 2 eine Mehrzahl von Injektionskanälen 3, die über die gesamte Werkzeugoberfläche 2 verlaufen. Die Injektionskanäle 3 sind dabei zum einen so angeordnet, dass sie von der linken unteren in die obere rechte Ecke verlaufen und zum anderen derart, dass sie von der rechten unteren in die linke obere Ecke, also im Wesentlichen diagonal, über die Werkzeugoberfläche 2 angeordnet sind. Injektionskanäle, die in dieselbe Richtung verlaufen, sind dabei im Wesentlichen parallel.

Durch die Anordnung der Injektionskanäle 3 in jeweils unterschiedlichen diagonalen Verlaufsrichtungen ergeben sich Kreuzungspunkte 4, die der Prozesssicherheit bei der Injektion des Matrixharzes dienen. Denn verstopft einer der Injektionskanäle 3, so kann eine vollständige Tränkung des Faserhalbzeuges dennoch erreicht werden, da das Matrixharz alternative Wege aufgrund der Vielzahl der Kreuzungspunkte 4 nehmen kann.

Darüber hinaus werden durch die unterschiedliche Ausrichtung der Injektionskanäle und die Bildung der Kreuzungspunkte Teilbereiche 5 definiert die ein später eingelegtes Faserhalbzeug (nicht gezeigt) in eben diese unterteilt. Da bei einer Injektion des Matrixharzes in die Injektionskanäle 3 zunächst eine linienförmige Tränkung des eingelegten Faserhalbzeuges erfolgt und eine Tränkung bzw. Injektion des Fasermaterials senkrecht zur Werkzeugoberfläche 2 in den Bereichen der Injektionskanäle 3 immer als sicher angenommen werden kann, bilden die Teilbereiche 5, die durch die Anordnung der Injektionskanäle 3 entstehen, das maximal mögliche ungetränkte Volumen. Ein größeres ungetränktes maximales Volumens als durch einen der Teilbereiche 5 definiert wird, ist aufgrund der Anordnung der Injektionskanäle 3 nicht möglich.

Durch die Annahme, dass die durch die Teilbereiche 5 gebildeten Volumen des Faserhalbzeuges den maximal größten ungetränkten Bereich darstellen und bei einem vorgegebenen Fehlertoleranzvolumen, das als ein tolerierbarer ungetränkter Restbereich (Restvolumen) akzeptabel ist, kann der benötigte Injektionsdruck ermittelt werden, mit dem das Matrixharz in das Faserhalbzeug injiziert werden muss, um die in den ungetränkten Teilbereichen 5 eingeschlossene Luft auf das tolerierbare ungetränkte Restvolumen zu komprimieren. Wird das Matrixharz mit diesen ermittelten Injektionsdruck beaufschlagt, so kann sichergestellt werden, dass das gesamte Faserhalbzeug mit Matrixharz getränkt ist, wobei maximal ein ungetränktes und trockenes Restvolumen der Größe des tolerierbaren ungetränkten Faserrestvolumens verbleiben würden. Somit kann eine 100%ig prozesssichere Bauteiltränkung sichergestellt werden.

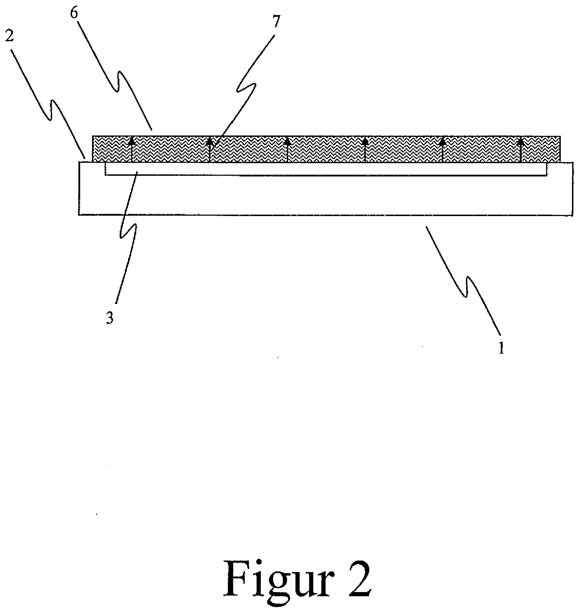

Figur 2 zeigt eine schematische Darstellung eines Schnittes durch das Formwerkzeug 1, wobei nunmehr ein Faserhalbzeug 6 in das Formwerkzeug eingelegt wurde. Wie in Figur 2 dargestellt befinden sich in der Werkzeugoberfläche 2 des Formwerkzeuges 1 die Injektionskanäle 3, die zur linienförmigen Injektion des Harzes entlang der Injektionskanäle 3 ausgebildet sind.

Figur 2 zeigt hierbei die Tränkung des Faserhalbzeuges 6 senkrecht zu der Werkzeugoberfläche 2, ausgehend von den Injektionskanälen 3. Wurde das Faserhalbzeug evakuiert, so wird alleine aufgrund des Atmosphärendruckes das Matrixharz in Richtung der Pfeile 7 in das Fasergelege 6 gedrückt, wobei sich somit zumindest entlang der Injektionskanäle 3 eine vollständige Tränkung senkrecht durch das Faserhalbzeug 6 erreichen lässt. Dies wird immer als sicher angenommen.

Werden darüber hinaus auch noch voreilgefährdete Bereiche als Fließhilfe berücksichtigt, so können durch Einsparung von Injektionskanälen die Kosten für das Formwerkzeug reduziert und somit der gesamte Herstellungsprozess kostengünstiger durchgeführt werden.

## Patentansprüche

1. Verfahren zur Herstellung eines Faserverbundbauteils, wobei ein in einem Formwerkzeug (1) eingebrachtes Faserhalbzeug (6) mit einem Matrixharz injiziert wird, **gekennzeichnet durch** die Schritte:
a.) Anordnen von Injektionskanälen (3) zur linienförmigen Injektion des Faserhalbzeuges entlang der Injektionskanäle (3) mit dem Matrixharz derart, dass das Faserhalbzeug (6) **durch** die Anordnung der Injektionskanäle (3) in eine Mehrzahl von Teilbereichen (5) unterteilt wird,
b.) Ermitteln eines Injektionsdruckes zum Injizieren des Matrixharzes in Abhängigkeit von einem Volumen zumindest eines Teilbereiches (5) und von einem vorgegebenen Fehlertoleranzvolumen, das ein tolerierbares ungetränktes Restvolumen des Teilbereichs (5) nach der Injektion des Matrixharz beschreibt, sodass keine ungetränkten Bereiche entstehen können, die ein größeres als das vorgegebene Fehlertoleranzvolumen aufweisen, wobei der Injektionsdruck mittels des idealen Gasgesetztes zur Komprimierung von Gasen ermittelt wird, und
c.) Injizieren des Matrixharz mittels der Injektionskanäle (3) in das Faserhalbzeug (6) mit dem ermittelten Injektionsdruck.

2. Verfahren nach Anspruch 1, **gekennzeichnet durch** Anordnen der Injektionskanäle (3) in einer Werkzeugoberfläche (2) des Formwerkzeuges (1).

3. Verfahren nach Anspruch 1 oder 2, **gekennzeichnet durch** Anordnen der Injektionskanäle (3) derart, dass eine erste Anzahl von Injektionskanälen (3) im Wesentlichen parallel zueinander und eine zweite Anzahl von Injektionskanälen (3) im Wesentlichen parallel zueinander ausgerichtet werden, wobei die zweite Anzahl von Injektionskanälen (3) nicht parallel zu der ersten Anzahl von Injektionskanälen (3) ist.

4. Verfahren nach einem der vorhergehenden Ansprüche, **gekennzeichnet durch** Anordnen der Injektionskanäle (3) derart, dass die Injektionskanäle (3) sich zumindest teilweise untereinander kreuzen, wobei die Teilbereiche (5) **durch** die von sich kreuzenden Injektionskanälen (3) eingeschlossenen Bereichen gebildet werden.

5. Verfahren nach einem der vorhergehenden Ansprüche, **gekennzeichnet durch** Anordnen der Injektionskanäle (3) derart, dass zumindest ein Teil der Injektionskanäle (3) im Wesentlichen parallel zu einer Bauteiloberfläche des Faserhalbzeuges (6) ausgerichtet sind.

6. Verfahren nach einem der vorhergehenden Ansprüche, **gekennzeichnet durch** Anordnen der Injektionskanäle (3) derart, dass im Wesentlichen gleichgroße Teilbereiche (5) entstehen.

7. Verfahren nach einem der vorhergehenden Ansprüche, **gekennzeichnet durch** Anordnen der Injektionskanäle (3) derart, dass voreilgefährdete Bereiche des Faserhalbzeuges (6) als Fließhilfen berücksichtigt werden.

8. Verfahren nach einem der vorhergehenden Ansprüche, **gekennzeichnet durch** Evakuieren des Formwerkzeuges (1) vor dem Injizieren des Matrixharzes, wobei in Schritt b) der Injektionsdruck weiterhin in Abhängigkeit von einer Druckdifferenz zwischen dem Innendruck des evakuierten Formwerkzeuges und dem äußeren Atmosphärendruck ermittelt wird.

## Claims

1. Method for the production of a fibre-composite component, wherein a fibrous semi-finished product (6) that is introduced into a moulding tool (1) is injected with a matrix resin, **characterized by** the following steps:
(a) arranging injection ducts (3) for the linear injection of the fibrous semi-finished product with the matrix resin along the injection ducts (3) in such a manner that the fibrous semi-finished product (6) by way of the arrangement of the injection ducts (3) is subdivided into a plurality of part-regions (5) ;
(b) determining an injection pressure for injecting the matrix resin, so as to depend on a volume of at least one part-region (5) and on a predefined error-tolerance volume which describes a tolerable non-soaked residual volume of the part-region (5) after the injection of the matrix resin, such that no non-soaked regions which have a larger volume than the predefined error-tolerance volume can be created, wherein the injection pressure is determined by means of the ideal gas law for compressing gases; and
(c) injecting the matrix resin at the determined injection pressure into the fibrous semi-finished product (6) by means of the injection ducts (3).

2. Method according to Claim 1, **characterized by** arranging the injection ducts (3) in a tool surface (2) of the moulding tool (1).

3. Method according to Claim 1 or 2, **characterized by** arranging the injection ducts (3) in such a manner that a first number of injection ducts (3) are aligned so as to be substantially mutually parallel, and a second number of injection ducts (3) are aligned so as to be substantially mutually parallel, wherein the second number of injection ducts (3) are not parallel with the first number of injection ducts (3).

4. Method according to one of the preceding claims, **characterized by** arranging the injection ducts (3) in such a manner that the injection ducts (3) are at least in part mutually intersecting, wherein the part-regions (5) are formed by regions that are enclosed by intersecting injection ducts (3).

5. Method according to one of the preceding claims, **characterized by** arranging the injection ducts (3) in such a manner that at least part of the injection ducts (3) are aligned so as to be substantially parallel with a component surface of the fibrous semi-finished product (6).

6. Method according to one of the preceding claims, **characterized by** arranging the injection ducts (3) in such a manner that part-regions (5) of substantially identical size are created.

7. Method according to one of the preceding claims, **characterized by** arranging the injection ducts (3) in such a manner that regions of the fibrous semi-finished product (6) that are prone to leading are considered as flow aids.

8. Method according to one of the preceding claims, **characterized by** evacuating the moulding tool (1) prior to the injection of the matrix resin, wherein in step b) the injection pressure is furthermore determined so as to depend on a pressure differential between the internal pressure of the evacuated moulding tool and the external atmospheric pressure.

## Revendications

1. Procédé de fabrication d'un composant en composite de fibres, dans lequel une résine de matrice est injectée dans une ébauche (6) de fibres placée dans un outil de moulage (1),
**caractérisé par** les étapes suivantes :
a.) placement de canaux d'injection (3) permettant une injection linéaire de la résine de matrice dans l'ébauche de fibres le long des canaux d'injection (3) de telle sorte que l'ébauche (6) de fibres soit divisée en plusieurs parties (5) par l'agencement des canaux d'injection (3),
b.) détermination de la pression d'injection de la résine de matrice en fonction du volume d'au moins une partie (5) et d'une erreur prédéterminée de tolérance sur le volume qui décrit le volume résiduel non imprégné tolérable de la partie (5) après l'injection de la résine de matrice, de telle sorte que ne puissent être produites des parties non imprégnées qui présentent un volume plus grand que l'erreur prédéterminée de tolérance sur le volume, la pression d'injection étant déterminée au moyen de la loi des gaz parfaits appliquée à la pression des gaz et
c.) injection de la résine de matrice au moyen des canaux d'injection (3) dans l'ébauche (6) de fibres à la pression d'injection qui a été déterminée.

2. Procédé selon la revendication 1, **caractérisé par** l'agencement des canaux d'injection (3) dans une surface (2) de l'outil de moulage (1).

3. Procédé selon les revendications 1 ou 2, **caractérisé par** l'agencement des canaux d'injection (3) de telle sorte qu'un premier nombre de canaux d'injection (3) soit orienté essentiellement en parallèle les uns aux autres et un deuxième nombre de canaux d'injection (3) soit orienté essentiellement en parallèle les uns aux autres, le deuxième nombre de canaux d'injection (3) n'étant pas parallèle au premier nombre de canaux d'injection (3).

4. Procédé selon l'une des revendications précédentes, **caractérisé par** l'agencement des canaux d'injection (3) de telle sorte qu'au moins certains des canaux d'injection (3) se croisent mutuellement, les parties (5) étant formées par les parties englobées par les canaux d'injection (3) qui se croisent.

5. Procédé selon l'une des revendications précédentes, **caractérisé par** l'agencement des canaux d'injection (3) de telle sorte qu'au moins une partie des canaux d'injection (3) soit orientée essentiellement en parallèle à une surface de composant de l'ébauche (6) de fibres.

6. Procédé selon l'une des revendications précédentes, **caractérisé par** l'agencement des canaux d'injection (3) de telle sorte que l'on obtienne des parties (5) essentiellement de même taille.

7. Procédé selon l'une des revendications précédentes, **caractérisé par** l'agencement des canaux d'injection (3) de telle sorte que des parties de l'ébauche (6) de fibres qui présentent un risque de suralimentation soient prises en compte comme accessoires d'écoulement.

8. Procédé selon l'une des revendications précédentes, **caractérisé par** la mise sous vide de l'outil de moulage (1) avant l'injection de la résine de matrice, la pression d'injection étant en outre déterminée à l'étape b) entre la différence entre la pression intérieure de l'outil de moulage mis sous vide et la pression atmosphérique extérieure.
